# EUROPÄISCHE PATENTSCHRIFT

(11) **EP 1 960 616 B1**
(45) Veröffentlichungstag und Bekanntmachung des Hinweises auf die Patenterteilung: **30.01.2019**
(21) Anmeldenummer: 06831714.8
(22) Anmeldetag: 13.12.2006
(51) Int. Cl.: E04D 13/147, E04D 1/30, B29C 45/14, B29L 31/10

(54) **DACHPLATTE MIT TRAUFENSEITIGEM PLASTISCHEN STREIFEN**
ROOFING PLATE WITH EAVE-SIDED PLASTIC STRIP
TUILE POURVUE D'UNE BANDE PLASTIQUE CÔTÉ ÉGOUT

(30) Priorität: 15.12.2005 AT 20012005
(43) Veröffentlichungstag der Anmeldung: 27.08.2008
(73) Patentinhaber: Ergo Gmbh, 3871 Nagelberg (AT)
(72) Erfinder: GOTTLER, Erich, A-3871 Nagelberg (AT)
(74) Vertreter: Burgstaller, Peter
(86) Internationale Anmeldenummer: PCT/IB2006/003612
(87) Internationale Veröffentlichungsnummer: WO 2007/069054

(56) Entgegenhaltungen:
- EP-A- 0 949 392
- DE-A- 2 222 208
- DE-U- 29 520 505

## Beschreibung

Die Erfindung betrifft eine als Kunststoffspritzgussteil gefertigte Dachplatte, welche eine in der Dachfläche anzuordnende Funktionseinheit, wie beispielsweise eine an der Dachfläche befestigte, über diese nach oben hinausragende Lüftungseinrichtung, trägt.

Da der zwangsweise über die Dachfläche hinausragende Teil von Dachlüftern aus optischen Gründen unabhängig von der Neigung der Dachfläche senkrecht stehen sollte, werden Dachlüfter häufig neigungseinstellbar ausgeführt. Bei einer weit verbreiteten Bauweise durchdringt ein Rohr von unten her die Dachebene und mündet in eine sich aus der durchdrungenen Dachplatte nach oben wölbende Kuppel. Die Kuppelfläche ist durchbrochen und von einer Haubenfläche überdeckt, welche nach oben hin in ein Auslassrohr mündet. Die Haubenfläche und mit ihr das Auslassrohr sind an der Kuppel um eine horizontal, normal auf die Falllinie des Daches liegende Achse schwenkbar, womit das Auslassrohr unabhängig von der Neigung der Dachfläche senkrecht eingestellt werden kann.

Dachlüfter dieser Art werden aus Kunststoffspritzgussteilen gefertigt. Ein typisches Beispiel ist in der AT 412 793 beschrieben. Damit findet man zwar mit einem Typ Dachlüfter für alle Neigungen von Dächern die mit einem bestimmten Dachsteintyp gelegt sind das Auslangen, man braucht allerdings nahezu für jeden auf dem Markt vorkommenden Dachsteintyp eine eigene Ausführungsvariante, deren Dachplattenform in ihrem Randbereich an den jeweiligen Dachsteintyp angepasst ist. Damit wird die Anzahl der Teile die pro Kunststoff-Spritzgusswerkzeug gefertigt wird relativ niedrig und der Werkzeugkostenanteil an den Teilekosten wird relativ hoch. Außerdem entsteht beträchtlicher Aufwand für Lieferung, Lagerhaltung und rechtzeitige richtige Auswahl der einzelnen Varianten.

Aus diesem Grund wird versucht, die individuell an bestimmte Typen von Dachziegeln anzupassenden Bereiche des Dachlüfters aus plastisch verformbaren Metall, typischerweise aus Bleiblech, auszuführen.

Die DE 2222208 A1 zeigt eine hohlkegelstumpfförmige Muffe, welche mit einer Dachplatte aus Metall verbunden ist. Die Muffe ist annähernd mittig in der Metalldachplatte platziert. Nachteilig ist insbesondere der hohe Metallanteil der Vorrichtung.

Die DE 92 00 759 U1 beschreibt eine Dachdurchführung in Kuppel-Hauben-Bauweise. Die Dachplatte wird dabei aus einem gut plastisch verformbaren Metallblech, typischerweise aus Blei, gebildet; die Kuppel wird als Kunststoffspritzgussteil ausgebildet. An der Verbindungslinie zwischen Kuppel und Dachplatte ist der Blechteil mit einer Nut versehen, deren Boden durch Bohrungen perforiert ist. Der Blechbereich mit der Nut wird beidseitig mit dem Kunststoff der Kuppel im Spritzgusswerkzeug umspritzt. Nachteilig an dieser Bauweise ist, dass ein relativ hoher Verschnitt an dem wertvollen Metallblech auftritt und dass die Vorrichtung relativ schlecht den Umgebungsbedingungen am Dach mit den beträchtlichen Temperatur- und Nässeschwankungen standhält.

Die DE 295 20 505 U1 schlägt eine Bauweise für eine Dachdurchführung in KuppelHauben-Bauweise vor, welche sich von der zuvor beschriebenen Bauweise dadurch unterscheidet, dass im Überlappungsbereich zwischen Blech und Kunststoff eine dauerelastische Schicht eingebettet ist, welche über längere Zeit indirekt ein dichtes Anliegen der verwendeten Komponenten aneinander bewirkt und damit das Zerstörung verursachende Eindringen von Feuchtigkeit in die Berührungsfläche verhindert. Entsprechend dieser Bauweise wird der Aufwand nochmals erhöht. Leider verliert die elastische Zwischenschicht in zu kurzer Zeit ihre bestimmungsgemäße Wirkung.

Die DE 29721602 U1 beschreibt ebenfalls eine Kombination aus einer Kuppel aus Kunststoff mit einer Dachplatte aus Bleiblech. Der kuppelseitige Rand des Bleibleches wird dabei zwischen dem Fußbereich der Kuppel an der Oberseite und einem Kunststoffring an der Unterseite, welche aneinander verankert werden, eingeklemmt. Es erweist sich als zu schwierig, die Bauteile so zu dimensionieren, dass sie einerseits bei den schwierigen Umgebungsbedingungen im Einsatz dauerhaft aneinander halten und auch dichten und andererseits dennoch problemlos aneinander zu montieren sind.

Die EP 0949392 A2 zeigt eine Dacheindeckungsplatte gemäß dem Oberbegriff des Anspruchs 1 z.B. für den Einbau eines Lüfters, welche an ihrem traufenseitigen Rand mit einer sich vom äußeren Rand der Querschnittsfläche her nach innen erweiternden Nut versehen ist, in welche ein Dichtstreifen in Form einer mit einem Randwulst versehen Schürze lösbar befestigt ist. Diese Schürze kann beispielsweise aus einem Bleiblech gebildet sein. Nachteilig an dieser Bauweise ist, dass die Herstellung dieser Nut in einem Kunststoffspritzgussteil mit vernünftigem Aufwand nicht möglich ist, und dass auch die Montage der Schürze an dieser Nut einigen Arbeitsvorgang erfordert.

Es ist relativ einfach, die verglichen mit Dachsteinen relativ dünne Dachplatte eines Dachlüfters an ihren seitlichen Rändern und an ihrem oberen Rand im Verbund mit den angrenzenden Dachsteinen eines geneigten Daches gut abzudichten, ohne dass die Dachplatte dafür genau an die individuelle Art der Dachsteine angepasst ist. Schwierig ist das nur am unteren, traufenseitigen Rand der Dachplatte. Dieser Tatsache Rechnung tragend sind auf dem Markt Dachdurchführungen in KuppelHauben-Bauweise erhältlich, bei denen die Dachplatte in einem Stück mit der Kuppel gespritzt wird und am traufenseitigen Rand der Dachplatte ein flexibler Dichtstreifen aus gewelltem weichem PVC angeformt ist, wobei die Profilrichtung der Wellen entlang der Falllinie des Daches verläuft. Eine Ausführungsvariante dieser Bauweise ist zur Kombination mit vielen verschiedenen Ausführungsvarianten von Dachsteineinen geeignet. Durch die Verwendung eines Kunststoffmaterials als Dichtstreifen vermeidet man die oben beschriebenen Probleme am Metall-Kunststoff-Übergang. Nachteilig an dieser Bauweise ist, dass sich der Dichtstreifen nicht wirklich an die Geometrie des traufenseitig folgenden Dachsteines anpassen lässt, da der Bereich seiner elastischen Verformbarkeit im Verhältnis zu dem Bereich seiner plastischen Verformbarkeit zu hoch ist. Konkret heißt das, dass der Dichtstreifen sich in mehreren großen Wellen von dem Dachstein abhebt, an welchem er eigentlich anliegen sollte.

Von diesem Stand der Technik ausgehend liegt die Aufgabe der Erfindung darin, einen als Kunststoffspritzgussteil gefertigten Dachlüfter für geneigte Dachflächen zur Verfügung zu stellen, dessen Dachplatte mit verschiedenen Typen von angrenzenden Dachsteinen kombinierbar ist. Die Dachplatte soll in dieser Kombination dauerhaft sicher ihre Dichtungsaufgabe erfüllen und die gesamte Anordnung soll gegenüber vorbekannten Ausführungsformen mit geringerem Kostenaufwand herstellbar sein.

Gemäß Anspruch 1 wird die Aufgabe gelöst, indem die Dachplatte des Dachlüfters als eine als Kunststoffteil gefertigte Dachplatte für geneigte Dachflächen ist, welche eine in der Dachfläche anzuordnende Funktionseinheit trägt, an ihrem Rand mit einem überwiegen plastisch und demgegenüber kaum bis gar nicht elastisch verformbaren Streifen aus einem flächigen Material erweitert ist, welcher in eine Nut im Randbereich des Kunststoffteiles ragt, und darin formschlüssig gegen Bewegung nach außen gehalten ist, wobei ausschließlich der traufenseitige Rand der Dachplatte in dieser Weise mit dem Streifen aus überwiegend plastisch verformbaren flächigen Material versehen ist und die den Randbereich des Streifens umfassende Nut an der Dachplatte in Querschnittsansicht mit zur Nutöffnung hin nach unten geneigten Nutflanken ausgebildet ist und wobei
a) die Dachplatte als Kunststoffspritzgussteil hergestellt wird,
b) der in die Nut im traufenseitigen Randbereich der Dachplatte ragende Randbereich des Streifens durch Durchbrüche perforiert ist und sich das Kunststoffmaterial der Dachplatte (1) in diese Durchbrüche erstreckt und
c) der Streifen in seiner Längsrichtung beidseitig über die Breite der Dachplatte hinausragt.

Als Material für den gewellten Streifen eignet sich Blei sehr gut, es sind aber auch Legierungen anderer Metalle, wie beispielsweise Kupferlegierungen denkbar. Als gut geeignet erscheinen auch Verbünde aus mehreren Materialen, beispielsweise solche, die aus Metallschichten und Kunststoffschichten zusammengesetzt sind, da damit Plastizität und gute Verbindungseigenschaften erreicht werden können. Sofern Kunststoffe erhältlich werden, welche allein entsprechende Verformungs- und Beständigkeitseigenschaften haben, sind diese natürlich auch gut dafür anwendbar.

Die Erfindung wird an Hand der Zeichnungen anschaulicher:

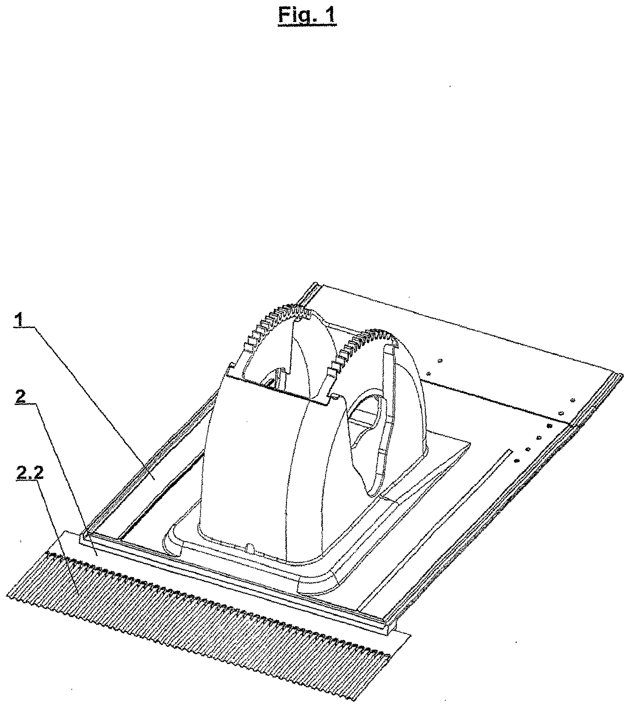

- Fig. 1:: zeigt eine erfindungsgemäße Dachplatte samt Streifen in perspektivischer Ansicht.

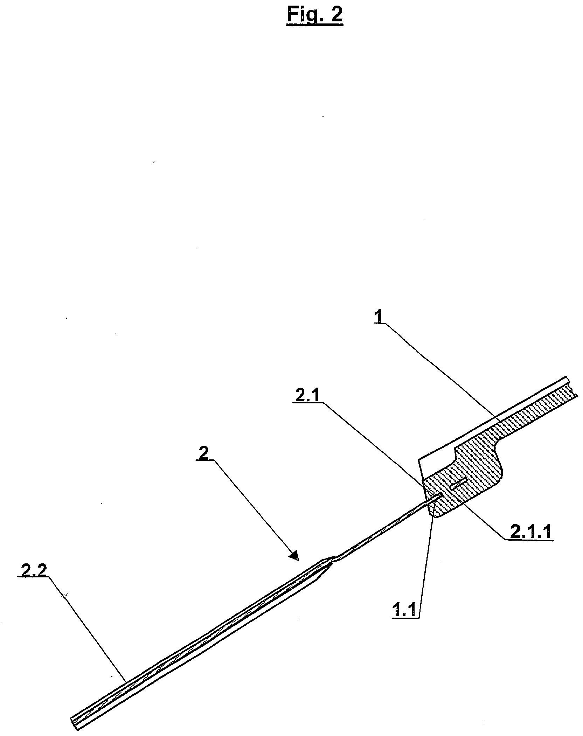

- Fig. 2:: zeigt den relevanten Teil der der Ausführungsform von Fig. 1 in einer seitlichen Schnittansicht.

Dadurch, dass der Streifen 2 aus plastisch verformbarem flächigem Material nur am traufenseitigen Rand der Dachplatte 1 angeordnet wird, kann die Nut 1.1 , in welche er an der Dachplatte 1 ragt, leicht mit zur Öffnung nach unten ausgerichteten Flanken ausgebildet werden. Dadurch treten Dichtigkeitsprobleme auch dann nicht auf, wenn der Streifen 2 und der Kunststoff der Dachplatte 1 irgendwann nicht mehr satt aneinander anliegen, sondern sich ein Spalt zwischen beiden bildet. Damit sich Streifen 2 und Dachplatte 1 dabei nicht voneinander lösen ist der Streifen 2 in dem vom Kunststoff umspritzten Randbereich 2.1 im vorliegenden Beispiel mit Durchbrüchen 2.1.1 versehen, in welche beim Spritzgussvorgang der Kunststoff der Dachplatte 1 dringt. Dadurch wird der Streifen 2 formschlüssig gegen Herausziehen aus der Nut 1.1 gehalten.

Um Dichtheitsprobleme zwischen der Dachplatte 1 und der bzw. den traufenseitig daran anschließenden Dachsteinen komfortabel vermeiden zu können, indem man den plastisch verformbaren Streifen 2 bei der Montage am Dach entsprechend anlegt, ist es ratsam, den Streifen 2 über die Seitenkanten der Dachplatte 1 hinausragen zu lassen. Aus dem gleichen Grund sollte der Streifen 2 an seinem von der Dachplatte 1 abgewandten Breitenbereich gewellt ausgeführt sein, wobei die Profilrichtung der Wellen 2.2 idealerweise normal zu der Verbindungslinie mit der Dachplatte 1, also parallel zur Falllinie der Dachfläche ausgerichtet sein soll. Im Bereich der Wellen 2.2 ist die einhüllende Fläche des Streifens 2 ohne großen Kraftaufwand nicht nur biegbar, sondern auch normal zur Profilrichtung der Wellen 2.2 dehnbar.

Bei der Herstellung des Verbundteiles aus Dachplatte 1 und Streifen 2 wird der mit Durchbrüchen 2.1.1 versehene Randbereich 2.1 des Streifens 2, in einem aus zwei aneinandergepressten Hälften bestehenden, einen Hohlraum einschließenden Werkzeug, mit dem die Dachplatte 1 bildenden Kunststoff umspritzt. Dazu muss der Streifen zwischen Teilen des Kunststoffspritzgusswerkzeuges in genau definierter Lage fest eingeklemmt sein. Es ist vorteilhaft dabei einen entsprechend zugeschnittenen und gebohrten, flachen Streifen aus dem plastisch verformbaren Material in das Kunststoffspritzgusswerkzeug einzulegen und die Wellen 2.2 durch den ohnedies erforderlichen Druck der Werkzeughälften gegeneinander zu formen. Die Werkzeughälften müssen dazu natürlich mit der entsprechenden negativen Oberflächenkontur versehen sein.

Die Erfindung wurde an Hand der Anwendung für Lüftungseinrichtungen erklärt. Sie ist aber prinzipiell für alle Anwendungen geeignet, bei denen es sinnvoll ist, Teile, welche in eine Dachfläche eingebaut werden müssen, durch eine als Kunststoffspritzgussteil ausgebildete Dachplatte zu halten. Als Anwendungen sind beispielsweise Dachfenster, Dachgauben, Kaminverwahrungen, Wandanschlüsse zu nennen.

## Patentansprüche

1. Als Kunststoffteil gefertigte Dachplatte für geneigte Dachflächen, welche eine in der Dachfläche anzuordnende Funktionseinheit trägt, an ihrem Rand mit einem überwiegen plastisch und demgegenüber kaum bis gar nicht elastisch verformbaren Streifen aus einem flächigen Material erweitert ist, welcher in eine Nut im Randbereich des Kunststoffteiles ragt, und darin formschlüssig gegen Bewegung nach außen gehalten ist, wobei ausschließlich der traufenseitige Rand der Dachplatte (1) in dieser Weise mit einem Streifen (2) aus überwiegend plastisch verformbaren flächigen Material versehen ist und die den Randbereich (2.1) des Streifens (2) umfassende Nut (1.1) an der Dachplatte (1) in Querschnittsansicht mit zur Nutöffnung hin nach unten geneigten Nutflanken ausgebildet ist, **dadurch gekennzeichnet, dass**
a) die Dachplatte (1) als Kunststoffspritzgussteil hergestellt wird, dass
b) der in die Nut (1.1) im traufenseitigen Randbereich der Dachplatte (1) ragende Randbereich (2.1) des Streifens durch Durchbrüche (2.1.1) perforiert ist, dass sich das Kunststoffmaterial der Dachplatte (1) in diese Durchbrüche erstreckt, und dass
c) der Streifen (2) in seiner Längsrichtung beidseitig über die Breite der Dachplatte (1) hinausragt.

2. Dachplatte nach Anspruch 1, **gekennzeichnet dadurch, dass** der Streifen (2) in seinem der Dachplatte (1) abgewandten Randbereich mit Wellen (2.2) ausgeführt ist.

3. Dachplatte nach einem der Ansprüche 1 bis 2, **dadurch gekennzeichnet, dass** der Streifen (2) aus einer Blei- oder Kupferlegierung gebildet ist.

4. Dachplatte nach einem der Ansprüche 1 bis 2, **dadurch gekennzeichnet, dass** der Streifen (2) durch einen Verbund aus Metall und Kunststoff gebildet ist.

5. Verfahren zur Herstellung einer Dachplatte nach einem der vorangegangenen Ansprüche,
**dadurch gekennzeichnet, dass**
die Dachplatte (1) als Kunststoffspritzgussteil hergestellt wird, als Ausgangmaterial für den Streifen (2) ein plastisch verformbares Material zwischen die Formhälften des den Formhohlraum für die Dachplatte (1) umschließenden Kunststoffspritzgusswerkzeugs eingelegt wird,
beim Spritzgießen ein Randbereich des Streifens (2) durch den Kunststoff zur Ausbildung der Nut (1.1) formschlüssig umspritzt wird.

6. Verfahren nach Anspruch 5, **dadurch gekennzeichnet, dass** beim Spritzgießen der Dachplatte (1) durch die Formhälften des Kunststoffspritzgusswerkzeugs Wellen (2.2) in dem Streifen (2) geprägt werden.

## Claims

1. Roof panel manufactured as a plastics part for inclined roof surfaces, which panel supports a functional unit to be arranged in the roof surface and is widened at its edge by means of a predominantly plastically deformable strip which in contrast is scarcely elastically deformable or is not elastically deformable at all and is made of a planar material and projects into a groove in the edge region of the plastics part and is form-fittingly held therein against movement outwards, only the eaves-side edge of the roof panel (1) being provided in this way with a strip (2) made of predominantly plastically deformable planar material, and the groove (1.1) which encloses the edge region (2.1) of the strip (2) in the roof panel (1) being formed, in cross-sectional view, so as to have groove flanks inclined downwards towards the groove opening, **characterised in that**
a) the roof panel (1) is produced as a plastics injection-moulded part, **in that**
b) the edge region (2.1) of the strip, which region projects into the groove (1.1) in the eaves-side edge region of the roof panel (1), is perforated, **in that** the plastics material of the roof panel (1) extends into these perforations, and **in that**
c) the strip (2), in the longitudinal direction thereof, projects beyond the width of the roof panel (1) at both ends.

2. Roof panel according to claim 1, **characterised in that** the strip (2) is designed to have corrugations (2.2) in its edge region that is remote from the roof panel (1).

3. Roof panel according to either claim 1 or claim 2, **characterised in that** the strip (2) is made of a lead or copper alloy.

4. Roof panel according to either claim 1 or claim 2, **characterised in that** the strip (2) is made of a composite of metal and plastics material.

5. Method for producing a roof panel according to any of the preceding claims, **characterised in that**
the roof panel (1) is produced as a plastics injection-moulded part,
a plastically deformable material is inserted between the mould halves of the plastics injection mould encompassing the mould cavity for the roof panel (1) as a starting material for the strip (2),
and during injection moulding, an edge region of the strip (2) is form-fittingly overmoulded with the plastics material in order to form the groove (1.1).

6. Method according to claim 5, **characterised in that**, during injection moulding of the roof panel (1), corrugations (2.2) are embossed in the strip (2) by the mould halves of the plastics injection mould.

## Revendications

1. Plaque de toit fabriquée sous la forme d'une pièce en matière synthétique et destinée à des surfaces de toit inclinées, laquelle plaque de toit porte une unité fonctionnelle à disposer dans la surface du toit et est étendue sur son bord par une bande constituée d'un matériau plat, déformable de manière essentiellement plastique, mais de manière faiblement ou nullement élastique, laquelle fait saillie dans une rainure de la zone de bord de la pièce en matière synthétique et y est maintenue par complémentarité de formes pour empêcher tout déplacement vers l'extérieur, seul le bord côté avant-toit de la plaque de toit (1) étant doté ainsi d'une bande (2) constituée d'un matériau plat, déformable de manière essentiellement plastique, et la rainure (1.1), comprenant la zone de bord (2.1) de la bande (2), étant réalisée au niveau de la plaque de toit (1) avec les flancs inclinés vers le bas en direction de l'ouverture de la rainure dans une vue en coupe transversale, **caractérisée en ce que**
a) la plaque de toit (1) est fabriquée sous la forme d'une pièce en matière synthétique moulée par injection, **en ce que**
b) des trous (2.1.1) sont percés dans la zone de bord (2.1) de la bande faisant saillie dans la rainure (1.1) de la zone de bord côté avant-toit de la plaque de toit (1), **en ce que** la matière synthétique de la plaque de toit (1) s'étend jusque dans ces trous, et **en ce que**
c) la bande (2) dépasse de la largeur de la plaque de toit (1) des deux côtés dans sa direction longitudinale.

2. Plaque de toit selon la revendication 1, **caractérisée en ce que** la bande (2) est conçue avec des ondulations (2.2) dans sa zone de bord opposée à la plaque de toit (1).

3. Plaque de toit selon l'une des revendications 1 et 2, **caractérisée en ce que** la bande (2) est formée à partir d'un alliage de plomb ou de cuivre.

4. Plaque de toit selon l'une des revendications 1 et 2, **caractérisée en ce que** la bande (2) est formée à partir d'un composite de métal et de matière synthétique.

5. Procédé de fabrication d'une plaque de toit selon l'une des revendications précédentes, **caractérisé en ce que**
la plaque de toit (1) est fabriquée sous la forme d'une pièce en matière synthétique moulée par injection,
un matériau déformable plastiquement est inséré en tant que matériau de base pour la bande (2) entre les demi-moules de l'outil de moulage par injection de matière synthétique renfermant la cavité du moule destinée à la plaque de toit (1),
lors du moulage par injection, une zone de bord de la bande (2) est enrobée de matière synthétique injectée pour former la rainure (1.1) par complémentarité de forme.

6. Procédé selon la revendication 5, **caractérisé en ce que**, lors du moulage par injection de la plaque de toit (1), des ondulations (2.2) sont matricées dans la bande (2) par les demi-moules de l'outil de moulage par injection de matière synthétique.
